# EUROPEAN PATENT APPLICATION

(11) **EP 4 760 878 A1**
(43) Date of publication of application: **17.06.2026**
(21) Application number: 24918859.0
(22) Date of filing: 22.11.2024
(51) Int. Cl.: H01M 10/6556, H01M 10/613, H01M 10/6551, H01M 10/643, H01M 50/213, H01M 50/249

(54) **BATTERY MODULE AND BATTERY PACK AND VEHICLE INCLUDING SAME**

(30) Priority: 17.01.2024 KR 20240007429
(71) Applicant: LG Energy Solution, Ltd., Seoul 07335 (KR)
(72) Inventor: LIM, Jong-Min, Daejeon 34122 (KR); BAEK, Seung-Ryul, Daejeon 34122 (KR); YOON, Han-Jong, Daejeon 34122 (KR); YEO, Kyeong-Mo, Daejeon 34122 (KR)
(74) Representative: BCKIP Part mbB
(86) International application number: PCT/KR2024/018669
(87) International publication number: WO 2025/154931

(57) **Abstract**

Disclosed is a battery module, and a battery pack and a vehicle including the same. The battery module includes a plurality of cylindrical battery cells; a heatsink configured to contact the plurality of cylindrical battery cells to cool the plurality of cylindrical battery cells; and a cell cover configured to cover the plurality of cylindrical battery cells, wherein a first battery cell among the plurality of cylindrical battery cells contacts a first surface of the heatsink, and a second battery cell among the plurality of cylindrical battery cells contacts a second surface of the heatsink, which is opposite to the first surface.

## Description

### TECHNICAL FIELD

This application is based on and claims priority from Korean Patent Application No. 10-2024-0007429, filed on January 17, 2024, with the Korean Intellectual Property Office, the disclosure of which is incorporated herein in its entirety by reference.

The present disclosure relates to a battery module, and a battery pack and a vehicle including the same, and more specifically, to a battery module capable of having a simplified structure, and a battery pack and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries may include a battery module having a case capable of protecting battery cells, so that a plurality of battery cells are stacked and accommodated in the case, and a battery pack in which a plurality of battery modules are accommodated.

Meanwhile, as types of secondary battery cells, there are known cylindrical, rectangular, and pouch-type battery cells. In the cylindrical battery cell, a separator, which is an insulator, is interposed between the positive electrode plate and the negative electrode plate, and this is wound to form a jelly-roll type electrode assembly, which is inserted into the battery can together with an electrolyte to form a battery.

The battery module including a conventional cylindrical battery cell has a problem in that the overall structure is complex and a sealing gasket is provided to prevent leakage of a liquid resin, which makes it difficult to reduce the weight.

### DISCLOSURE

### Technical Problem

Therefore, the present disclosure is directed to providing a battery module whose overall structure may be simplified to reduce weight, and a battery pack and a vehicle including the same.

In addition, the present invention is directed to providing a battery module capable of preventing leakage of a liquid resin without a sealing gasket, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a plurality of cylindrical battery cells; a heatsink configured to contact the plurality of cylindrical battery cells to cool the plurality of cylindrical battery cells; and a cell cover configured to cover the plurality of cylindrical battery cells, wherein a first battery cell among the plurality of cylindrical battery cells contacts a first surface of the heatsink, and a second battery cell among the plurality of cylindrical battery cells contacts a second surface of the heatsink, which is opposite to the first surface.

In an embodiment, the heatsink may be arranged in a vertical direction, and the plurality of cylindrical battery cells may be arranged in a horizontal direction and are in contact with the heatsink.

In an embodiment, a plate that supports the heatsink may be coupled to a perimeter of the heatsink.

In an embodiment, the plate may include an upper plate coupled to an upper portion of the heatsink; a lower plate coupled to a lower portion of the heatsink; a front plate coupled to a front portion of the heatsink; and a rear plate coupled to a rear portion of the heatsink.

In an embodiment, a center portion of the upper plate may be coupled to the heatsink, and the upper plate may be symmetrical with respect to the heatsink.

In an embodiment, a center portion of the lower plate may be coupled to the heatsink, and the lower plate may be symmetrical with respect to the heatsink.

In an embodiment, a center portion of the front plate may be coupled to the heatsink, and the front plate may be symmetrical with respect to the heatsink.

In an embodiment, a center portion of the rear plate may be coupled to the heatsink, and the rear plate may be symmetrical with respect to the heatsink.

In an embodiment, the plate may be coupled to the heatsink to have a cross section of 'H' shape.

In an embodiment, the battery module may further comprise a cell support member having a through hole into which the plurality of cylindrical battery cells are inserted to support the plurality of cylindrical battery cells, the cell support member being coupled to the heatsink.

In an embodiment, an upper surface protrusion may be formed on an upper surface of the heatsink, a fastening hole may be formed in the upper plate, and the upper surface protrusion may be coupled to the fastening hole.

In an embodiment, a coupling portion of the upper surface protrusion and the fastening hole may be welded.

In an embodiment, a lower surface protrusion may be formed on a lower surface of the heatsink, a fastening hole may be formed in the lower plate, and the lower surface protrusion may be coupled to the fastening hole.

In an embodiment, a coupling portion of the lower surface protrusion and the fastening hole may be welded.

In an embodiment, the upper plate may be coupled to at least one of the front plate and the rear plate by welding.

In an embodiment, the lower plate may be coupled to at least one of the front plate and the rear plate by welding.

In an embodiment, the cell cover may be provided as a pair to cover the cylindrical battery cells at both sides of the heatsink.

In an embodiment, a liquid resin may be provided between the heatsink and the cell cover.

Meanwhile, according to another aspect of the present disclosure, there may be provided a battery pack including the battery module described above, and a vehicle including the battery module.

### Advantageous Effects

Embodiments of the present disclosure have the effect of simplifying the internal frame and simplifying the overall structure, thereby reducing weight.

In addition, the present disclosure has the effect of preventing leakage of a liquid resin even without a sealing gasket.

However, the effects that can be obtained through the present disclosure are not limited to the above, and other effects not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery module according to an embodiment of the present disclosure in an assembled state.
FIG. 2 is an exploded perspective view showing the battery module according to an embodiment of the present disclosure.
FIG. 3 is a cross-sectional view, taken along line A-A' of FIG. 1.
FIG. 4 is a perspective view showing the battery module according to an embodiment of the present disclosure before a plate is coupled to a heatsink.
FIG. 5 is an enlarged view showing a part B of FIG. 4.
FIG. 6 is a perspective view showing the battery module according to an embodiment of the present disclosure in which an upper plate and a lower plate are coupled to the heatsink.
FIG. 7 is a perspective view showing that a front plate and a rear plate are coupled to the heatsink in FIG. 6.
FIG. 8 is a cross-sectional view, taken along line C-C' of FIG. 7.
FIGS. 9 to 15 are drawings for illustrating a process of manufacturing the battery module according to an embodiment of the present disclosure.
FIG. 16 is a drawing schematically showing the configuration of a battery pack including the battery module according to each embodiment of the present disclosure.
FIG. 17 is a drawing for explaining a vehicle including the battery pack of FIG. 16.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

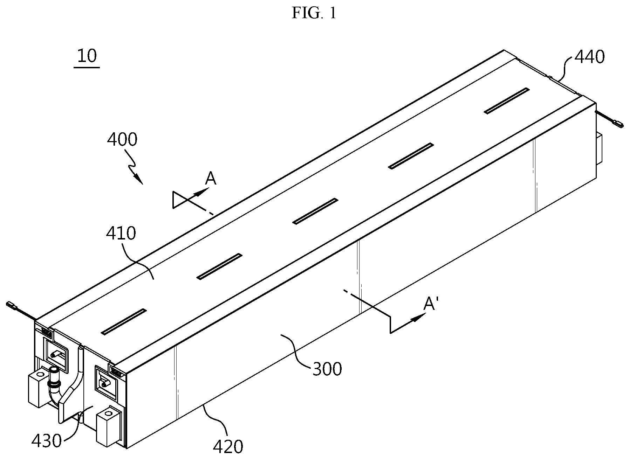

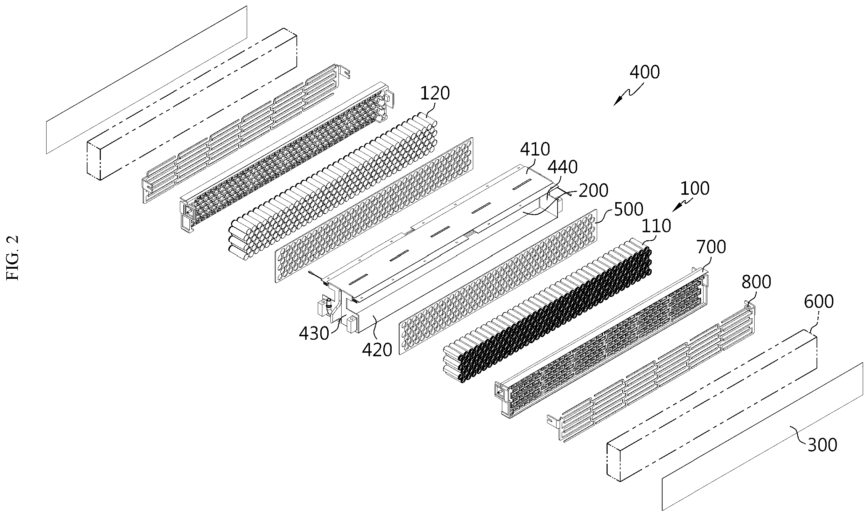

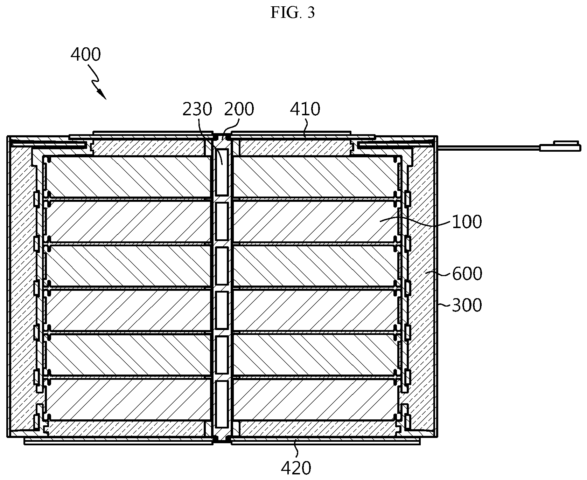

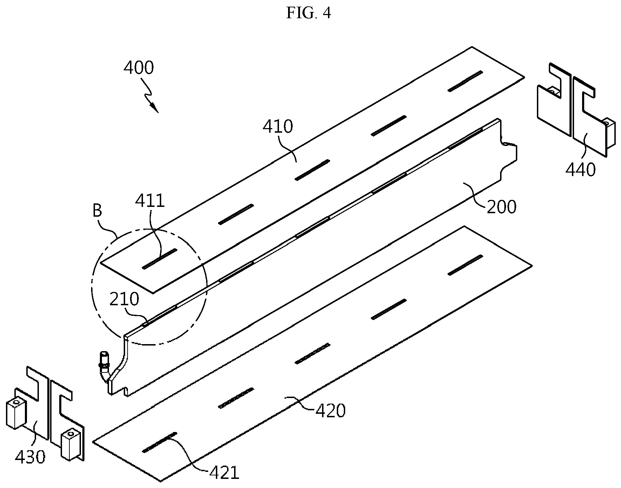

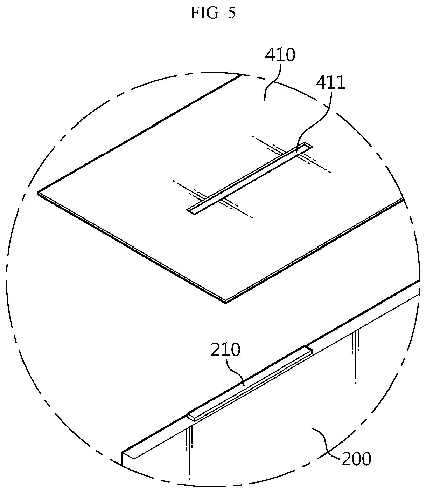

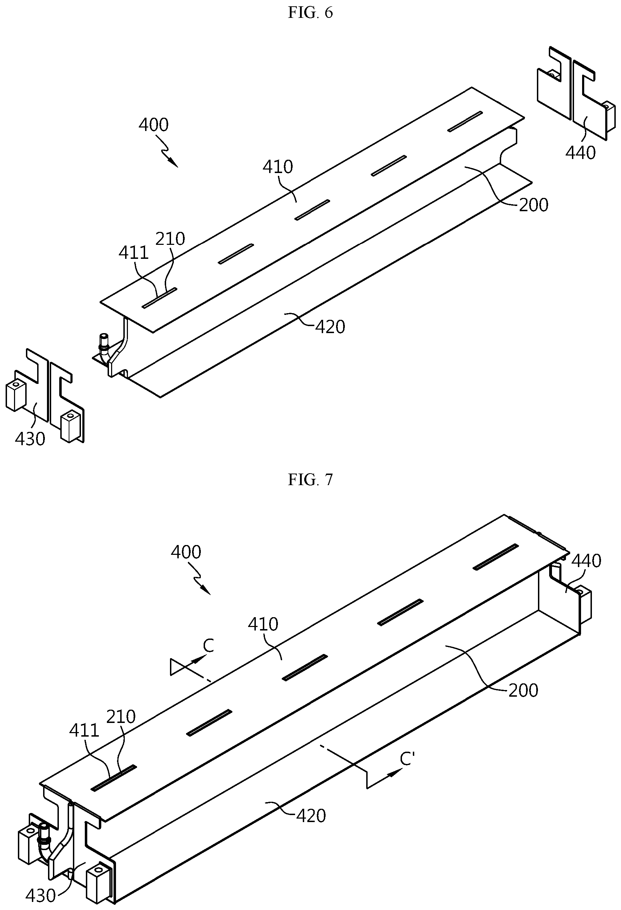

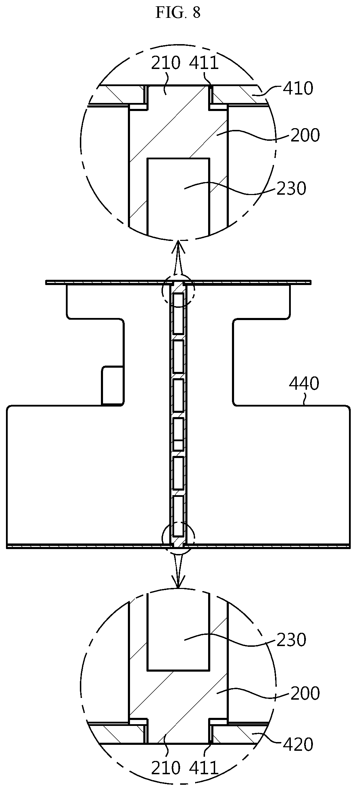

FIG. 1 is a perspective view showing a battery module according to an embodiment of the present disclosure in an assembled state, FIG. 2 is an exploded perspective view showing the battery module according to an embodiment of the present disclosure, FIG. 3 is a cross-sectional view, taken along line A-A' of FIG. 1, FIG. 4 is a perspective view showing the battery module according to an embodiment of the present disclosure before a plate is coupled to a heatsink, FIG. 5 is an enlarged view showing a part B of FIG. 4, FIG. 6 is a perspective view showing the battery module according to an embodiment of the present disclosure in which an upper plate and a lower plate are coupled to the heatsink, FIG. 7 is a perspective view showing that a front plate and a rear plate are coupled to the heatsink in FIG. 6, and FIG. 8 is a cross-sectional view, taken along line C-C' of FIG. 7.

Referring to FIGS. 1 to 3, the battery module 10 according to an embodiment of the present disclosure includes a cylindrical battery cell 100, a heatsink 200, and a cell cover 300.

The cylindrical battery cell 100 is provided in plurality. Here, the cylindrical battery cell 100 may include an electrode assembly, a battery can, and a cap plate.

The electrode assembly has a structure in which a positive electrode plate, a negative electrode plate, and a separator interposed between the positive electrode plate and the negative electrode plate are wound in one direction. In addition, the electrode assembly may have a center hole formed at the center thereof, and may be formed in a jelly-roll type.

For example, the electrode assembly may be manufactured by winding a stack formed by sequentially stacking a negative electrode plate, a separator, a positive electrode plate, and a separator at least once. Here, the positive electrode plate and the negative electrode plate may be formed in a sheet shape.

That is, the electrode assembly applied to this embodiment may be a winding-type electrode assembly. In this case, an additional separator may be provided on the outer surface of the electrode assembly for insulation from the battery can. That is, the electrode assembly may have a wound structure well known in the art without limitation.

The positive electrode plate may have a positive electrode active material applied to one or both surfaces thereof, and a first uncoated portion may be formed at an end of the positive electrode plate on which the positive electrode active material is not applied. The first uncoated portion may be exposed to the outside of the separator while forming a plurality of winding turns based on the center of the electrode assembly, and may be used as an electrode tab by itself. However, it is also possible that the first uncoated portion is not formed on the positive electrode plate.

The negative electrode plate may have a negative electrode active material applied to one or both surfaces thereof, and a second uncoated portion may be formed at an end of the negative electrode plate on which the negative electrode active material is not applied. The second uncoated portion may be exposed to the outside of the separator while forming a plurality of winding turns based on the center of the electrode assembly, and may be used as an electrode tab by itself. However, it is also possible that the second uncoated portion is not formed on the negative electrode plate.

Here, when the positive electrode plate and the negative electrode plate each include an uncoated portion, the first uncoated portion and the second uncoated portion may be configured to face opposite directions.

In addition, the positive electrode active material coated on the positive electrode plate and the negative electrode active material coated on the negative electrode plate may be used without limitation as long as they are active materials known in the art.

The separator may use a porous polymer film, for example, a porous polymer film made of a polyolefin polymer such as an ethylene homopolymer, a propylene homopolymer, an ethylene/butene copolymer, an ethylene/hexene copolymer, an ethylene/methacrylate copolymer, etc., alone or in combination.

As another example, the separator may use a common porous nonwoven fabric, such as a nonwoven fabric made of high-melting-point glass fiber, polyethylene terephthalate fiber, etc.

At least one surface of the separator may include a coating layer of inorganic particles. It is also possible that the separator itself is formed as a coating layer of inorganic particles. The particles forming the coating layer may have a structure in which they are coupled with a binder so that an interstitial volume exists between adjacent particles.

In addition, the center hole of the electrode assembly is also used for welding the cell terminal (positive electrode terminal) and the positive electrode current collection plate. That is, the cell terminal and the positive electrode current collection plate may be welded by irradiating a laser through the center hole of the electrode assembly.

The electrode assembly is accommodated in the battery can. In addition, a through hole may be formed in the battery can. Here, the battery can is formed in a cylindrical shape so that the electrode assembly is accommodated inside the battery can, and the battery can may be electrically connected to the negative electrode plate of the electrode assembly. Accordingly, the battery can may have the same polarity as the negative electrode plate, i.e., a negative polarity.

The diameter of the battery can is larger than the diameter of the electrode assembly. A gap of a preset size may be formed between the battery can and the positive electrode current collection plate, and an insulator may be interposed in the gap.

If the size of the electrode assembly is increased while the size of the battery can is determined according to the standard, the total capacity of the cylindrical battery cell 100 increases, but the gap between the battery can and the electrode assembly decreases.

That is, when the size of the electrode assembly is increased to increase the overall capacity of the cylindrical battery cell 100, the gap between the battery can and the electrode assembly decreases. Therefore, in order to increase the capacity of the cylindrical battery cell 100, an insulator must be able to be interposed in the reduced gap between the battery can and the electrode assembly. To this end, it is desirable that the insulator has as smaller thickness as possible.

The battery can is a roughly cylindrical receiver and may be made of a conductive material such as metal. The material of the battery can may be made of a conductive metal such as aluminum, steel, stainless steel, etc., but is not limited thereto.

The positive electrode current collection plate is electrically connected to the positive electrode plate, and, for example, is connected to the positive electrode plate at the top of the electrode assembly. For example, the positive electrode current collection plate is made of a conductive metal material and may be electrically connected to the first uncoated portion of the positive electrode plate.

The cell terminal is made of a conductive metal material and is electrically connected to the positive electrode current collection plate. In addition, the cell terminal is electrically connected to the positive electrode plate of the electrode assembly through the positive electrode current collection plate, thereby having a positive polarity.

That is, the cell terminal may function as a positive electrode terminal. Also, the battery can is electrically connected to the negative electrode plate of the electrode assembly as described above, thereby having a negative polarity.

The negative electrode current collection plate is electrically connected to the negative electrode plate, and for example, is connected to the negative electrode plate at the bottom of the electrode assembly. For example, the negative electrode current collection plate is made of a conductive metal material such as aluminum, steel, copper, nickel, etc., and may be electrically connected to the second uncoated portion of the negative electrode plate.

The negative electrode current collection plate may be electrically connected to the battery can. For this purpose, at least a part of an edge portion of the negative electrode current collection plate may be interposed and fixed between the inner surface of the battery can and the sealing gasket.

In one embodiment, at least a part of the edge portion of the negative electrode current collection plate may be fixed to the beading portion by welding in a state of being supported on the bottom surface of the beading portion formed at the lower end of the battery can.

In addition, at least a part of the remaining portion of the negative electrode current collection plate, excluding the coupling portion of the beading portion, may be coupled to the folded surface of the second uncoated portion by welding, for example, laser welding.

Also, at least a part of an edge of the negative electrode current collection plate may be electrically coupled to one of the upper surface and the lower surface of the beading portion, which is adjacent to the crimping portion.

The cap plate is configured to seal the opening formed at the bottom of the battery can. The cap plate may be made of, for example, a metal material to ensure rigidity.

In addition, the cap plate may be provided as nonpolar by being separated from the electrode assembly. That is, the cap plate may not have polarity even if it is made of a conductive metal material.

The non-polarity of the cap plate means that the cap plate is electrically insulated from the battery can and the cell terminal. Likewise, the cap plate may not have polarity, and its material does not necessarily have to be a conductive metal.

The cap plate may be seated on and supported by the beading portion formed on the battery can. In addition, the cap plate is fixed by the crimping portion, explained later. A sealing gasket may be interposed between the cap plate and the crimping portion of the battery can to ensure airtightness of the battery can. That is, the sealing gasket may be arranged to be interposed between the edge of the cap plate and the opening of the battery can.

The heatsink 200 is a member that absorbs and dissipates heat from another object through direct or indirect thermal contact, and cools the plurality of cylindrical battery cells 100 by contacting the plurality of cylindrical battery cells 100.

The heatsink 200 may be configured in various ways, and for example, may be provided in a form in which a flow path 230 through which a cooling fluid (water or air) may flow is formed therein, as in FIGS. 3 and 8. However, the present disclosure is not limited thereto.

Referring to FIG. 7, the plate 400 supporting the heatsink 200 may be coupled to the perimeter of the heatsink 200. Here, the plate 400 may be configured in various ways, and may be configured to include, for example, an upper plate 410, a lower plate 420, a front plate 430, and a rear plate 440.

Referring to FIGS. 4 to 7, for example, the heatsink 200 may be arranged in a vertical direction such that its narrow surface faces upward and downward, as in FIG. 4. In addition, as in FIG. 6, the upper plate 410 may be coupled to the upper portion of the heatsink 200, and the lower plate 420 may be coupled to the lower portion of the heatsink 200.

Here, the upper plate 410 and the lower plate 420 may be coupled to the heatsink 200 in various ways. For example, referring to FIG. 6, the center portion of the upper plate 410 is coupled to the heatsink 200, and the upper plate 410 may be configured to be symmetrical left and right with respect to the heatsink 200. In addition, the center portion of the lower plate 420 is coupled to the heatsink 200, and the lower plate 420 may be configured to be symmetrical left and right with respect to the heatsink 200.

In addition, as in FIG. 7, the front plate 430 may be coupled to the front side of the heatsink 200, and the rear plate 440 may be coupled to the rear side of the heatsink 200. In FIG. 7, the portion where the front plate 430 is located is the front side of the battery module 10, and the portion where the rear plate 440 is located is the rear side of the battery module 10.

Here, the front plate 430 and the rear plate 440 may be coupled to the heatsink 200 in various ways. For example, referring to FIG. 7, the center portion of the front plate 430 is coupled to the heatsink 200, and the front plate 430 may be configured to be symmetrical left and right with respect to the heatsink 200. In addition, the center portion of the rear plate 440 is coupled to the heatsink 200, and the rear plate 440 may be configured to be symmetrical left and right with respect to the heatsink 200.

Referring to FIG. 7, the plate 400 (the upper plate 410, the lower plate 420, the front plate 430, and the rear plate 440) may be coupled with the heatsink 200 to form a cross section of 'H' shape. However, the present disclosure is not limited thereto.

That is, in the battery module 10 according to an embodiment of the present disclosure, the heatsink 200 may be coupled with the plate 400 to form an 'H' shape. Here, the heatsink 200 and the plate 400 may be manufactured as an integral part from the manufacturing stage, or the heatsink 200 and the plate 400 may be manufactured separately and then coupled with each other to form an integral part.

Referring to FIGS. 5 and 8, an upper surface protrusion 210 may be formed on the upper surface of the heatsink 200, a fastening hole 411 may be formed on the upper plate 410, and the upper surface protrusion 210 may be coupled to the fastening hole 411. In addition, the coupling portion of the upper surface protrusion 210 and the fastening hole 411 may be coupled by welding.

Also, referring to FIG. 8, a lower surface protrusion 220 may be formed on the lower surface of the heatsink 200, a fastening hole 421 may be formed on the lower plate 420, and the lower surface protrusion 220 may be coupled to the fastening hole 421. In addition, the coupling portion of the lower surface protrusion 220 and the fastening hole 421 may be coupled by welding.

In addition, the upper plate 410 may be coupled to at least one of the front plate 430 and the rear plate 440 by welding. Also, the lower plate 420 may be coupled to at least one of the front plate 430 and the rear plate 440 by welding.

In this way, when the upper plate 410, the lower plate 420, the front plate 430, and the rear plate 440 are fixedly connected to the heatsink 200, a heatsink 200 of an 'H' shape may be formed. Hereinafter, the heatsink 200 in which the upper plate 410, the lower plate 420, the front plate 430, and the rear plate 440 are fixedly connected to the heatsink 200 in an 'H' shape is referred to as an integrated heatsink 200.

Referring to FIG. 2, the plurality of cylindrical battery cells 100 are arranged in a horizontal direction (a direction in which the negative electrode or the positive electrode terminal of the battery cells 100 contacts a wide surface of the heatsink 200) and contact the heatsink 200.

That is, the first battery cell 110 among the plurality of cylindrical battery cells 100 contacts the first surface of the heatsink 200, and the second battery cell 120 among the plurality of cylindrical battery cells 100 contacts the second surface of the heatsink 200, which is opposite to the first surface.

This allows the heat generated from the cylindrical battery cell 100 to be discharged.

In addition, a gasket (a gasket provided in the conventional technology) for preventing leakage of the liquid resin 600 is unnecessary due to the structure and shape of the plate 400 and the heatsink 200 as described above. That is, since the integrated heatsink 200 is formed as an integral body so that the gap through which the resin leaks is eliminated, even without a gasket for sealing, leakage of liquid resin 600 may be prevented by the plate 400 and the heatsink 200 with the structure and shape described above.

In addition, since the gasket is unnecessary, the internal frame is simplified, assembly is easy, the process time is shortened, the cost is reduced, and the overall weight is also reduced.

Meanwhile, since components such as gaskets are eliminated, even if the plate 400 is made of aluminum, overall weight may be reduced. In other words, the rigidity of the plate 400 may be secured by making the plate 400 with aluminum. However, the present disclosure is not limited thereto.

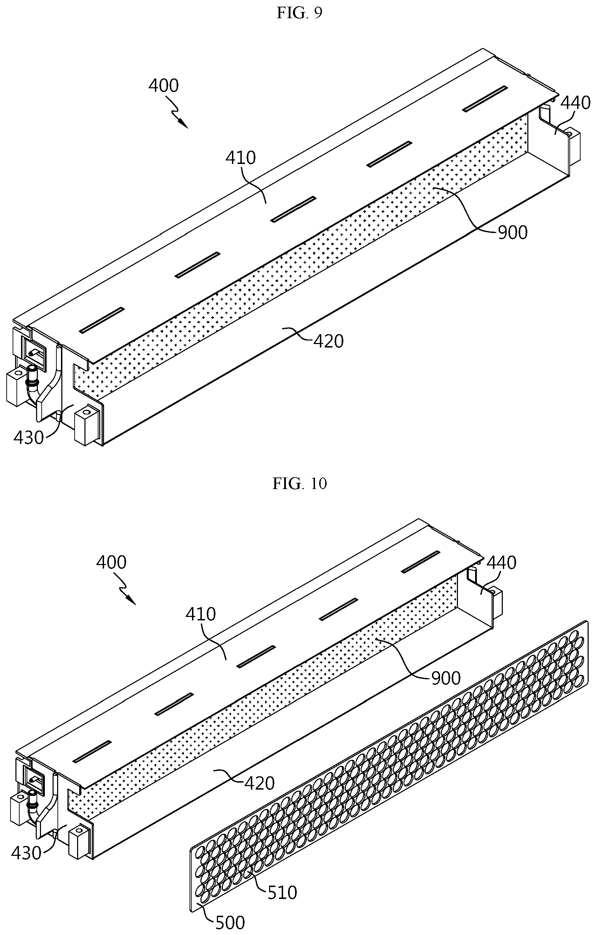

Referring to FIG. 2, a cell support member 500 has a through hole 510 (see FIG. 10) into which the plurality of cylindrical battery cells 100 are inserted to support the plurality of cylindrical battery cells 100, and is coupled to the heatsink 200. Since the cell support member 500 does not require a sealing function and simply has a function of supporting the plurality of cylindrical battery cells 100, a simple structure is acceptable.

The liquid resin 600 may be provided between the heatsink 200 and the cell cover 300. Here, the resin 600 may be a thermal resin for cooling the plurality of cylindrical battery cells 100.

In FIG. 2, reference sign 700 designates a bus bar frame, and reference sign 800 designates a bus bar.

Referring to FIG. 2, the cell cover 300 is configured to cover the plurality of cylindrical battery cells 100. The cell cover 300 may have various shapes, for example, may be formed in a rectangular shape, but the shape of the cell cover 300 is not limited thereto.

The cell cover 300 may be provided as a pair. Also, the pair of cell covers 300 may be provided to cover the cylindrical battery cell 100 at both sides of the heatsink 200.

FIGS. 9 to 15 are drawings for illustrating a process of manufacturing the battery module according to an embodiment of the present disclosure. The process of manufacturing the battery module is carried out sequentially from FIG. 9 to FIG. 15.

Referring to FIG. 9, an adhesive 900 is applied to the integrated heatsink 200 in which the lower plate 420, the front plate 430, and the rear plate 440 are fixedly connected to the heatsink 200.

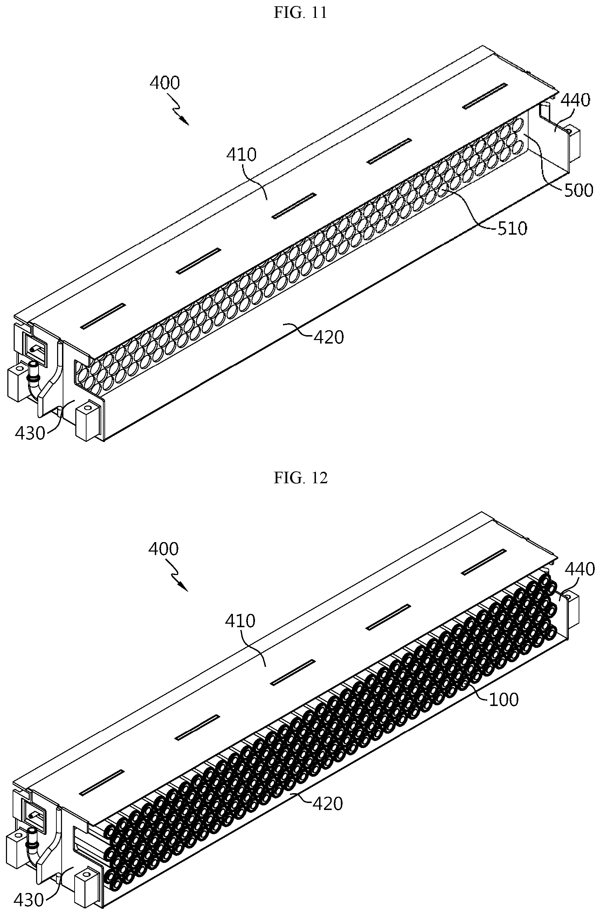

In addition, referring to FIGS. 10 and 11, the cell support member 500 is coupled to the integrated heatsink 200 by the adhesive 900.

Also, referring to FIG. 12, the plurality of cylindrical battery cells 100 are inserted into and supported by the through hole 510 of the cell support member 500 and are in contact with the side surface of the heatsink 200.

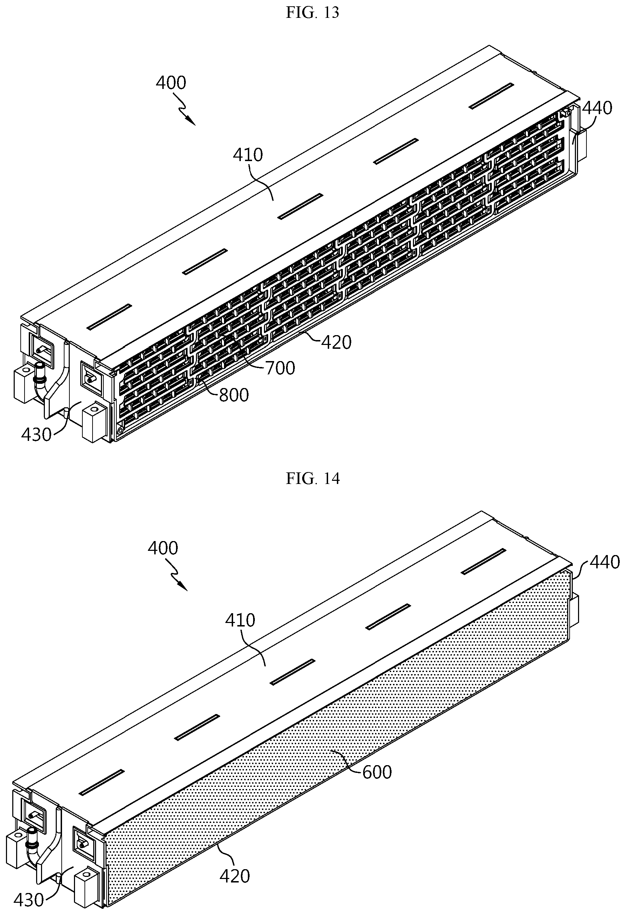

In addition, referring to FIG. 13, a bus bar 800 connecting the cylindrical battery cell 100 and a bus bar frame 700 supporting the bus bar 800 are coupled.

Also, referring to FIG. 14, the liquid resin 600 is applied to FIG. 13.

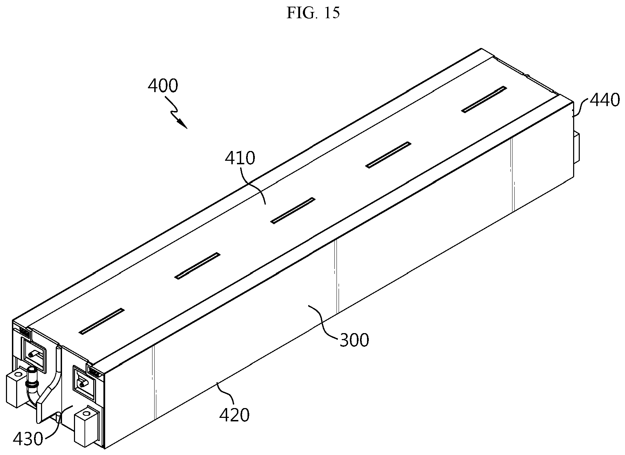

In addition, referring to FIG. 15, the cell cover 300 is coupled.

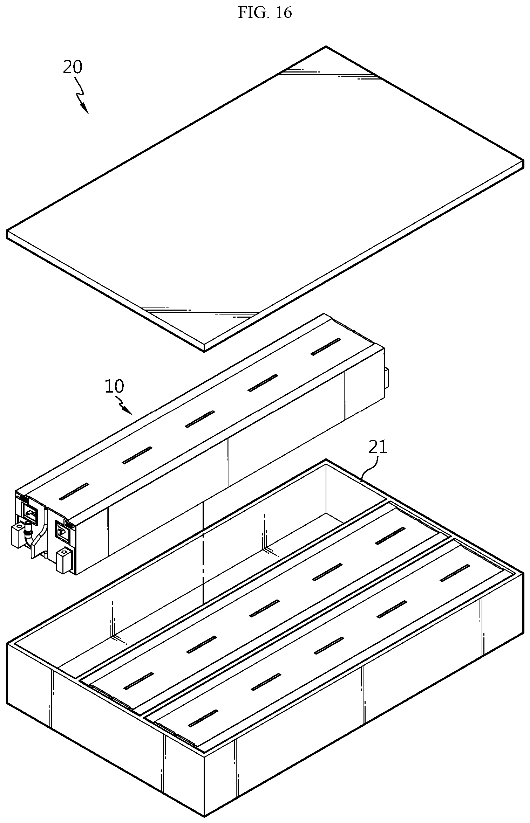

FIG. 16 is a drawing schematically showing the configuration of a battery pack including the battery module according to each embodiment of the present disclosure.

Referring to FIG. 16, a battery pack 20 according to an embodiment of the present disclosure may include one or more battery modules 10 according to each embodiment of the present disclosure described above.

In addition, the battery pack 20 may further include a pack housing 21 for accommodating the battery module 10, and various devices for controlling charging and discharging of the cylindrical battery cell 100 included in the battery module 10, such as a BMS, a current sensor, and a fuse.

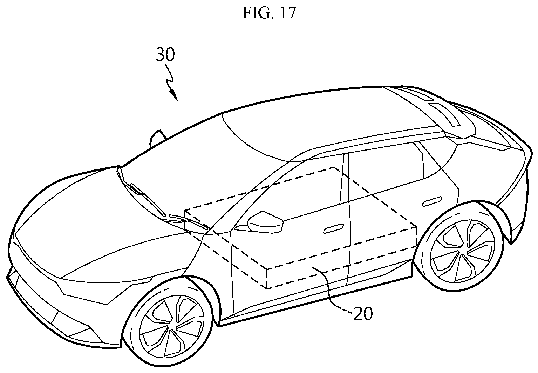

FIG. 17 is a drawing for explaining a vehicle including the battery pack of FIG. 16.

Referring to FIG. 17, a vehicle 30 according to an embodiment of the present disclosure may include one or more battery modules 10 according to each embodiment of the present disclosure or one or more battery packs according to each embodiment of the present disclosure.

Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a plurality of cylindrical battery cells;
a heatsink configured to contact the plurality of cylindrical battery cells to cool the plurality of cylindrical battery cells; and
a cell cover configured to cover the plurality of cylindrical battery cells,
wherein a first battery cell among the plurality of cylindrical battery cells contacts a first surface of the heatsink, and a second battery cell among the plurality of cylindrical battery cells contacts a second surface of the heatsink, which is opposite to the first surface.

2. The battery module according to claim 1,
wherein the heatsink is arranged in a vertical direction, and the plurality of cylindrical battery cells are arranged in a horizontal direction and are in contact with the heatsink.

3. The battery module according to claim 2,
wherein a plate that supports the heatsink is coupled to a perimeter of the heatsink.

4. The battery module according to claim 3,
wherein the plate includes:
an upper plate coupled to an upper portion of the heatsink;
a lower plate coupled to a lower portion of the heatsink;
a front plate coupled to a front portion of the heatsink; and
a rear plate coupled to a rear portion of the heatsink.

5. The battery module according to claim 4,
wherein a center portion of the upper plate is coupled to the heatsink, and
wherein the upper plate is symmetrical with respect to the heatsink.

6. The battery module according to claim 4,
wherein a center portion of the lower plate is coupled to the heatsink, and
wherein the lower plate is symmetrical with respect to the heatsink.

7. The battery module according to claim 4,
wherein a center portion of the front plate is coupled to the heatsink, and
wherein the front plate is symmetrical with respect to the heatsink.

8. The battery module according to claim 4,
wherein a center portion of the rear plate is coupled to the heatsink, and
wherein the rear plate is symmetrical with respect to the heatsink.

9. The battery module according to claim 4,
wherein the plate is coupled to the heatsink to have a cross section of 'H' shape.

10. The battery module according to claim 1, further comprising:
a cell support member having a through hole into which the plurality of cylindrical battery cells are inserted to support the plurality of cylindrical battery cells, the cell support member being coupled to the heatsink.

11. The battery module according to claim 4,
wherein an upper surface protrusion is formed on an upper surface of the heatsink, a fastening hole is formed in the upper plate, and the upper surface protrusion is coupled to the fastening hole.

12. The battery module according to claim 11,
wherein a coupling portion of the upper surface protrusion and the fastening hole is welded.

13. The battery module according to claim 4,
wherein a lower surface protrusion is formed on a lower surface of the heatsink, a fastening hole is formed in the lower plate, and the lower surface protrusion is coupled to the fastening hole.

14. The battery module according to claim 13,
wherein a coupling portion of the lower surface protrusion and the fastening hole is welded.

15. The battery module according to claim 4,
wherein the upper plate is coupled to at least one of the front plate and the rear plate by welding.

16. The battery module according to claim 4,
wherein the lower plate is coupled to at least one of the front plate and the rear plate by welding.

17. The battery module according to claim 1,
wherein the cell cover is provided as a pair to cover the cylindrical battery cells at both sides of the heatsink.

18. The battery module according to claim 1,
wherein a liquid resin is provided between the heatsink and the cell cover.

19. A battery pack comprising the battery module according to any one of claims 1 to 18.

20. A vehicle comprising the battery module according to any one of claims 1 to 18.
